# EUROPÄISCHE PATENTSCHRIFT

(11) **EP 1 004 420 B1**
(45) Veröffentlichungstag und Bekanntmachung des Hinweises auf die Patenterteilung: **04.12.2002**
(21) Anmeldenummer: 99119709.6
(22) Anmeldetag: 05.10.1999
(51) Int. Cl.: B29C 45/33, B29C 45/44, A47G 25/28

(54) **Formwerkzeug zum Spritzgiessen eines Kleiderbügels**
Mould for injection moulding a garment hanger
Moule pour mouler par injection un cintre pour vêtements

(30) Priorität: 27.11.1998 DE 19854841
(43) Veröffentlichungstag der Anmeldung: 31.05.2000
(73) Patentinhaber: Coronet-Kunststoffwerk GmbH, D-64689 Grasellenbach (DE)
(72) Erfinder: Seckelmann, Herbert, 64689 Grasellenbach (DE)
(74) Vertreter: Lasch, Hartmut Dipl.-Ing.

(56) Entgegenhaltungen:
- DE-C- 3 526 637
- DE-U- 29 512 339
- FR-A- 2 566 257
- US-A- 3 293 697

## Beschreibung

Die Erfindung betrifft ein Formwerkzeug zum Spritzgießen eines aufrecht stehenden Kleiderbügels, der einen zwei Bügelarme bildenden Bügelkörper mit nach unten offenem U-Profil aufweist, gemäß dem Oberbegiff des Anspruchs 1.

Das Spritzgießen von Kleiderbügeln ist ein schwer zu beherrschendes und relativ aufwendiges Verfahren, da komplizierte Formwerkzeuge notwendig sind, um dem Kleiderbügel die gewünschte Formgebung zu verleihen. Dies gilt zwar insbesondere für sogenannte Formbügel, die quer zu ihrer Längserstreckung räumlich gewölbt sind, jedoch treten die grundsätzlich gleichen Probleme auch bei sogenannten Flachbügeln auf.

Wenn ein Kleiderbügel der eingangs genannten Art stehend, d.h. in aufrechter Aufrichtung, gespritzt wird (DE 295 12 339 U), ist ein unteres Werkzeugteil vorgesehen, das die Unterseite des Kleiderbügels abformt und einen Kern oder Kernabschnitt aufweist, der die Innenkontur des mit einem U-Profil ausgebildeten Bügelkörpers abformt. Oberhalb des unteren Werkzeugteils ist ein relativ zu diesem in vertikaler Hauptöffnungsrichtung verstellbares oberes Werkzeugteil vorgesehen, das im wesentlichen die Außenkontur des Bügelkörpers abformt. Zwischen dem oberen und dem unteren Werkzeugteil ist der der Form des Kleiderbügels entsprechende Formhohlraum gebildet.

Um zusätzlich auch auf der Oberseite der Bügelarme auszubildende Rockeinschnitte ausformen zu können, die jeweils von einer oberseitigen, von einer federnden Lasche zumindest teilweise überdeckten Ausnehmung im Bügelarm gebildet sind, ist es allgemein bekannt, seitliche Formschieber vorzusehen, die im wesentlichen senkrecht zur Hauptöffnungsrichtung verstellbar sind und von beiden Seiten des Formhohlraums in diesen eingreifen und dabei die Außenkontur des Bügelkörpers im Bereich des Rockeinschnittes abformen.

Es hat sich in der Praxis gezeigt, daß Kleiderbügel sich insbesondere bei Verwendung für Strickwaren mit den Enden ihrer Bügelarme häufig in dem Kleidungsstück verhaken, wodurch dieses beschädigt werden kann. Es ist deshalb gewünscht, die äußeren Enden der Bügelarme so abzurunden, daß ein Verhaken mit dem Kleidungsstück erschwert oder vermieden ist. Dies kann beispielsweise dadurch erreicht werden, daß die Enden der Bügelarme in stetiger Krümmung nach innen, d.h. in Richtung der Mitte des Kleiderbügels abgebogen und eingezogen werden. Dies führt jedoch sowohl außenseitig als auch innenseitig zu einer Hinterschneidung, die ein Entformen eines derartigen Kleiderbügels unmöglich macht, da das obere Werkzeugteil vom unteren Werkzeugteil nicht mehr abgehoben werden kann. Es ist deshalb versucht worden, die Kleiderbügel liegend zu spritzen und die äußeren Endbereiche der Bügelarme nicht als U-Profil, sondern als Vollprofil oder zumindest mit einer derart großen Wandstärke auszubilden, daß die innenseitige, aufgrund der äußeren konvexen Formgebung der Enden der Bügelarme gegebene Hinterschneidung vermieden ist. Dieses Vorgehen führt jedoch zu einem erhöhten Materialverbrauch und erhöht darüber hinaus das Gewicht des Kleiderbügels.

Der Erfindung liegt die Aufgabe zugrunde, ein Formwerkzeug zum Spritzgießen eines aufrecht stehenden Kleiderbügels zu schaffen, das in einfacher Weise unterschiedliche Ausgestaltungen der Randbereiche der Bügelarme und insbesondere auch nach innen gezogene Endbereiche ermöglicht und den Materialverbrauch gering hält.

Diese Aufgabe wird erfindungsgemäß bei einem Formwerkzeug dadurch gelöst, daß jedem Bügelarm zumindest ein Paar von im wesentlichen senkrecht zur Hauptöffnungsrichtung verstellbaren Formschiebern zugeordnet ist, die auf entgegengsetzten Seiten des Kleiderbügels angeordnet sind, und daß jedes Paar von Formschiebern die Außenkontur des Bügelkörpers in einem äußeren Endabschnitt abformt, der sich bis zum äußeren freien Ende des jeweiligen Bügelarms erstreckt.

Erfindungsgemäß ist somit vorgesehen, daß die Endbereiche der Bügelarme in ihrer U-förmigen Innenkontur wie üblich von dem Kern des unteren Werkzeugteils abgeformt werden, während die Außenkontur in dem äußeren Endabschnitt des Bügelarms vollständig von den seitlichen Formschiebern abgeformt wird. Dies bringt den Vorteil mit sich, daß der Kleiderbügel in seinen Endbereichen der Bügelarme nach dem Zurückfahren der Formschieber freiliegt. Dies ermöglicht es, die äußeren Enden der Bügelarme in genannter Weise nach innen zu ziehen, ohne eine Wandstärkenerhöhung vorsehen zu müssen. Dabei kann der Kern in den die äußeren Enden der Bügelarme des Kleiderbügels abformenden Bereichen eine Hinterschneidung aufweisen, da der Kleiderbügel bei geöffnetem Formwerkzeug unter elastischer Verformung seiner äußeren Enden von den Hinterschneidungen des Kerns abgenommen werden kann.

Wenn der Kleiderbügel auf der Oberseite der Bügelarme mit Rockeinschnitten ausgebildet werden soll, sollten die Formschieber im Zusammenwirken auch jeweils zumindest einen Rockeinschnitt ausformen, wie dies aus dem Stand der Technik an sich bekannt ist.

In bevorzugter Ausgestaltung ist jedem Bügelarm ein Paar von Formschiebern zugeordnet, die jeweils in Ausnehmungen verschieblich geführt sind, die in den Werkzeugteilen ausgebildet sind.

Weitere Einzelheiten und Merkmale des erfindungsgemäßen Formwerkzeugs sind aus der folgenden Beschreibung eines Ausführungsbeispiels unter Bezugnahme auf die Zeichnung ersichtlich. Es zeigen:
- Figur 1: einen ausschnittsweisen Vertikalschnitt durch einen im Formwerkzeug angeordneten Kleiderbügel, wobei die Formschieber weggelassen sind,
- Figur 2: den Schnitt II-II gemäß Figur mit geschlossenen Formschiebern,
- Figur 3: die Darstellung gemäß Figur 2 mit geöffneten Formschiebern und
- Figur 4: eine vergrößerte Darstellung des äußeren Endabschnitts eines Bügelarms unmittelbar vor der Abnahme von dem Kern.

Ein in den Figuren dargestelltes Formwerkzeug 10 zum Spritzgießen eines aufrecht stehenden Kleiderbügels 20 umfaßt ein unteres Werkzeugteil 12, das einen oberseitigen Kern 12a besitzt, der die Innenkontur eines mit nach unten offenem U-Profil ausgebildeten Bügelkörpers 21 des Kleiderbügels 20 ausformt. Oberhalb des unteren Werkzeugteils 12 ist ein oberes Werkzeugteil 11 vorgesehen, das die Außenkontur des Bügelkörpers 21 im Bereich des mittleren Hauses 25 sowie der seitlich daran anschließenden Abschnitte der beiden Bügelarme 22 ausformt.

Nahe den äußeren Endbereichen der Bügelarme 22 ist auf deren Oberseite jeweils ein Rockeinschnitt 23 vorgesehen, der von einer oberseitigen, von einer federnden Zunge 26 annähernd vollständig überdeckten Ausnehmung im Bügelarm 22 gebildet ist.

Die äußeren Endbereiche 24 der Bügelarme 22 des Kleiderbügels 20 sind in stetiger Krümmung nach innen, d.h. zur Mitte des Kleiderbügels abgebogen, so daß eine konvexe Außenfläche gebildet ist. Der Endpunkt der Bügelarme 22 liegt dabei der Mitte des Kleiderbügels näher als der am weitesten außenliegende Punkt des Bügelarms, so daß im unteren Formteil 12 eine nach innen, zur Mitte gerichtete Hinterschneidung 18 ausgebildet ist.

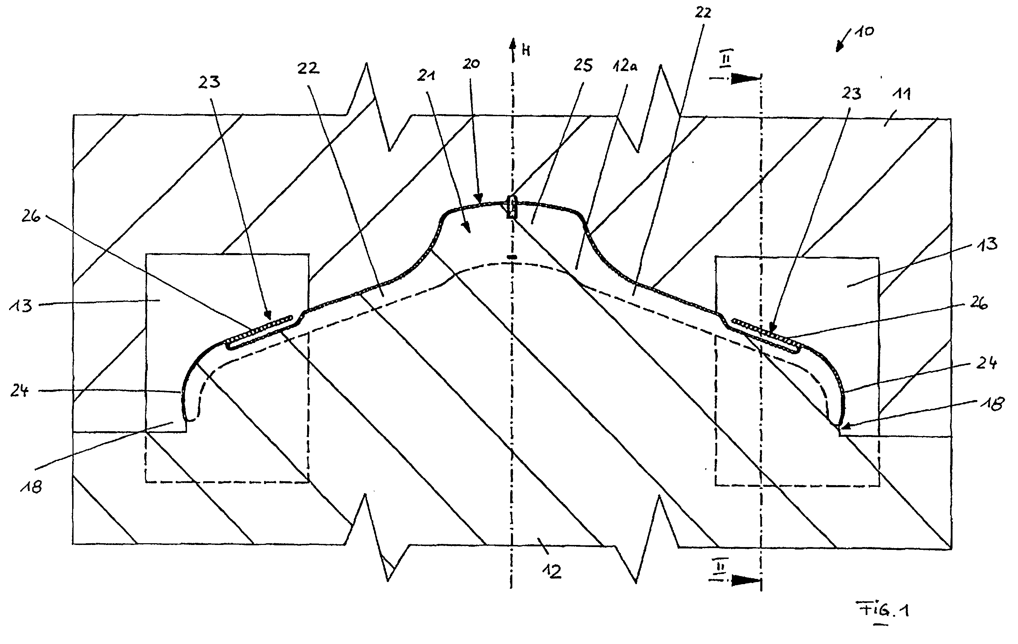

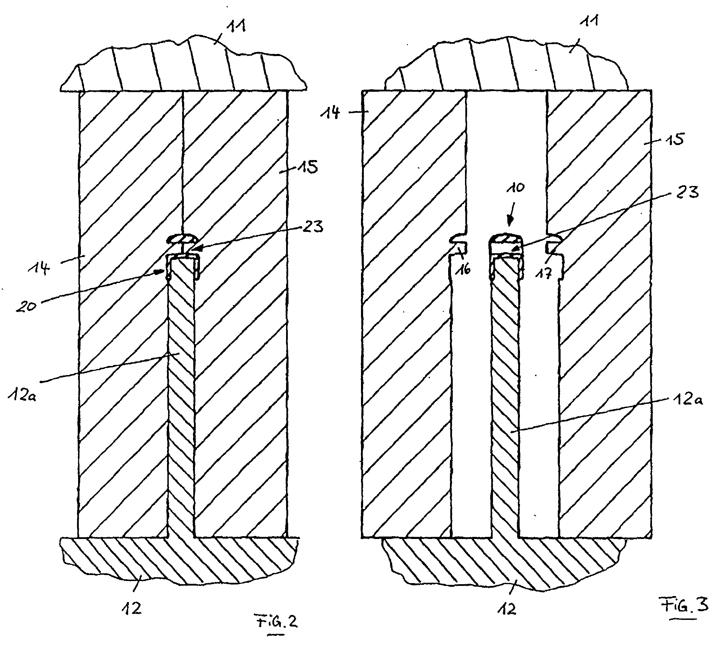

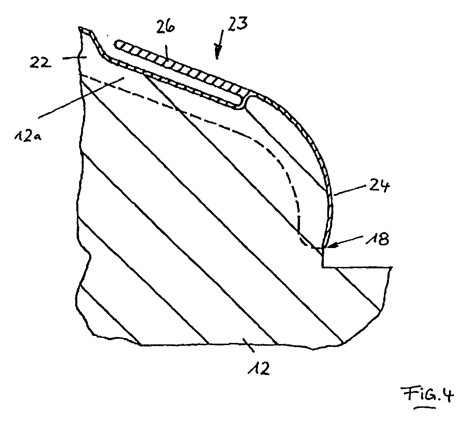

Die beiden Formteile 11 und 12 sind zum Öffnen und Schließen des Formwerkzeuges in vertikaler Hauptöffnungsrichtung H relativ zueinander bewegbar. In den beiden Werkzeugteilen 11 und 12 sind quer zur Hauptöffnungsrichtung H verlaufende Ausnehmungen bzw. Durchbrechungen 13 vorgesehen, in die Formschieber 14, 15 (s. Fig. 2 und 3) seitlich einfahrbar sind. Die Formschieber sind auf entgegengesetzten Seiten des Kleiderbügels 20 angeordnet und formen im Zusammenwirken die Außenkontur des Bügelkörpers in dem äußeren Endabschnitt sowie über vorstehende Nasen 16 und 17 auch jeweils einen der Rockeinschnitte 23 ab.

Zur Ausbildung eines Kleiderbügels werden die beiden Werkzeugteile 11 und 12 geschlossen und die Formschieber 14 und 15 werden seitlich in die Ausnehmungen 13 der Werkzeugteile 11 und 12 bis zum gegenseitigen Kontakt eingefahren. In dieser Stellung ist zwischen den Werkzeugteilen 11 und 12 im Zusammenwirken mit den Formschiebern 14 und 15 ein Formhohlraum für einen stehend ausgerichteten Kleiderbügel gebildet, der auf seiner Oberseite der Bügelarme jeweils einen Rockeinschnitt 23 besitzt und in den äußeren Endbereichen 24 der Bügelarme nach innen gezogen ist. In diesen Formhohlraum wird in bekannter Weise Kunststoffmaterial eingespritzt, wobei das Formwerkzeug solange geschlossen gehalten wird, bis das Kunststoffmaterial zumindest vorverfestigt ist. Anschlieβend fahren die Formschieber 14, 15 in Querrichtung auseinander (s. Fig. 3), wobei die Nasen 16 und 17 mit den Rockeinschnitten 23 außer Eingriff kommen. Daraufhin fahren die beiden Formteile 11 und 12 in Hauptöffnungsrichtung H auseinander, so daß der Kleiderbügel 20 frei auf dem Kern 12a des unteren Werkzeugteils 12 sitzt. Dieser Zustand ist im Querschnitt in Figur 3 sowie in einer das äußere Ende des Bügelarms zeigenden Detaildarstellung in Figur 4 dargestellt. An seinem äußeren freien Ende greift der Bügelarm 20 hierbei noch in die Hinterschneidung 18 des untern Werkzeugsteils 12 ein. Mittels eines nicht dargestellten Ausstoßers wird der Kleiderbügel dann von dem Kern 12a nach oben abgehoben, wobei die äußeren Endabschnitte 24 der Bügelarme aufgrund ihrer noch gegebenen Eigenelastizität unter elastischer Verformung aus der Hinterschneidung 18 freikommen.

## Patentansprüche

1. Formwerkzeug zum Spritzgießen eines aufrecht stehenden Kleiderbügels, der einen zwei Bügelarme (22) bildenden Bügelkörper (21) mit nach unten offenem U-Profil aufweist, mit einem unteren Werkzeugteil (12), das einen die Innenkontur des U-profilierten Bügelkörpers (21) formenden Kern (12a) umfaßt, und einem oberen Werkzeugteil (11), das die Außenkontur des Bügelkörpers (21) zumindest bereichsweise abformt, wobei die beiden Werkzeugteile (11, 12) zur Entformung des Kleiderbügels (20) relativ zu einander in Hauptöffnungsrichtung H des Formwerkzeugs (10) bewegbar sind, **dadurch gekennzeichnet, daß** jedem Bügelarm (22) zumindest ein Paar von im wesentlichen senkrecht zur Hauptöffnungsrichtung verstellbaren Formschiebern (14, 15) zugeordnet ist, die auf entgegengesetzten Seiten des Kleiderbügels (20) angeordnet sind, und daß jedes Paar von Formschiebern (14, 15) die Außenkontur des Bügelkörpers (21) in einem äußeren Endabschnitt abformt, der sich bis zum äußeren freien Ende (24) des jeweiligen Bügelarms (22) erstreckt.

2. Formwerkzeug nach Anspruch 1, **dadurch gekennzeichnet, daß** der Kern (12a) in den die äußeren Enden (24) der Bügelarme (22) des Kleiderbügels (20) abformenden Bereichen eine Hinterschneidung (18) aufweist und daß der Kleiderbügel (20) unter elastischer Verformung seiner äußeren Enden (24) von den Hinterschneidungen (18) des Kerns (12a) bei geöffnetem Formwerkzeug und zurückgefahrenen Formschiebern abnehmbar ist.

3. Formwerkzeug nach Anspruch 1 oder 2, **dadurch gekennzeichnet, daß** die Formschieber (14, 15) im Zusammenwirken jeweils zumindest einen auf der Oberseite jedes Bügelarms (22) angeordneten Rockeinschnitt (23) ausformen.

4. Formwerkzeug nach einem der Ansprüche 1 bis 3, **dadurch gekennzeichnet, daß** die Formschieber (14, 15) in in den Werkzeugteilen (11, 12) ausgebildeten Ausnehmungen (13) verschieblich geführt sind.

5. Formwerkzeug nach einem der Ansprüche 1 bis 4, **dadurch gekennzeichnet, daß** der Kern (12a) des unteren Werkzeugteils (12a) die U-förmige Innenkontur der äußeren Endabschnitte der Bügelarme (22) abformt.

## Claims

1. Mould for the injection moulding of an upright clothes hanger, which has a hanger body (21) forming two hanger arms (22) and provided with a downwardly open U-section, with a lower mould part (12), which comprises a core (12a) shaping the inner contour of the U-sectioned hanger body (21) and an upper mould part (11), which at least zonally moulds the outer contour of the hanger body (21), in which for the demoulding of the clothes hanger (20), the two mould parts (11, 12) are movable relative to one another in the main opening direction H of the mould (10), **characterized in that** with each hanger arm (22) is associated at least one pair of shaping sliders (14, 15) adjustable substantially perpendicular to the main opening direction and which are placed on opposite sides of the clothes hanger (20) and that each pair of shaping sliders (15) moulds the outer contour of the hanger body (21) in an outer end portion extending up to the outer free end (24) of the particular hanger arm (22).

2. Mould according to claim 1, **characterized in that** in the areas moulding the outer ends (24) of the hanger arms (22) of the clothes hanger (20), the core (12a) has an undercut (18) and that, accompanied by the elastic deformation of its outer ends (24), the clothes hanger (20) can be removed from the undercuts (18) of the core (12a) when the mould is opened and the shaping sliders are retracted.

3. Mould according to claim 1 or 2, **characterized in that** the shaping slides (14, 15) in cooperation in each case mould at least one skirt indentation (23) on the top of each hanger arm (22).

4. Mould according to one of the claims 1 to 3, **characterized in that** the shaping sliders (14, 15) are displaceably guided in recesses (13) formed in the mould parts (11, 12).

5. Mould according to one of the claims 1 to 4, **characterized in that** the core (12a) of the lower mould part (12) moulds the U-shaped inner contour of the outer end portions of the hanger arms (22).

## Revendications

1. Moule pour mouler par injection en position debout un cintre présentant un corps de cintre (21) formant deux bras de cintre (22) à profil en U ouvert vers le bas, comprenant une pièce de moule inférieure (12) entourant un noyau (12a) formant le profil intérieur du corps de cintre (21) profilé en U, et une pièce de moule supérieure (11) moulant le profil extérieur du corps de cintre (21) au moins par zones, les deux pièces de moule (11, 12) étant déplaçables l'une par rapport à l'autre dans la direction d'ouverture principale H du moule (10) pour démouler le cintre (20), **caractérisé en ce que** l'on associe à chaque bras de cintre (22) au moins une paire de coulisses de moule (14,15) réglables sensiblement verticalement par rapport à la direction d'ouverture principale, disposées sur des faces opposées du cintre (20), et **en ce que** chaque paire de coulisses de moule (14,15) moule le profil extérieur du corps de cintre (21) dans une zone d'extrémité extérieure s'étendant jusqu'à l'extrémité libre (24) extérieure du bras de cintre (22) respectif.

2. Moule selon la revendication 1, **caractérisé en ce que** le noyau (12a) présente dans les zones délimitant les extrémités extérieures (24) des bras de cintre (22) du cintre (20) une contre-dépouille (18) et **en ce que** le cintre (20) peut être dégagé par déformation élastique de ses extrémités extérieures (24) des contre-dépouilles (18) du noyau (12a) après avoir ouvert le moule et reculé les coulisses de moule.

3. Moule selon la revendication 1 ou 2, **caractérisé en ce que** les coulisses de moule (14, 15) forment par action conjointe chaque fois au moins une encoche pour jupe disposée sur la face supérieure de chaque bras de cintre (22).

4. Moule selon l'une quelconque des revendications 1 à 3, **caractérisé en ce que** les coulisses de moule (14, 15) sont guidées déplaçables dans des évidements (13) conformés dans les pièces de moule (11, 12).

5. Moule selon l'une quelconque des revendications 1 à 4, **caractérisé en ce que** le noyau (12a) de la pièce de moule inférieure (12) moule le profil intérieur conformé en U des zones d'extrémité extérieures des bras de cintre (22).
